# EUROPEAN PATENT SPECIFICATION

(11) **EP 1 984 637 B1**
(45) Date of publication and mention of the grant of the patent: **04.04.2012**
(21) Application number: 07762982.2
(22) Date of filing: 30.01.2007
(51) Int. Cl.: F16C 1/10, F16H 13/04, B62M 25/04

(54) **Shifter for manipulating a continuously variable transmission**
Schalter zur Bedienung eines stufenlosen Getriebes
Sélecteur de manoeuvre d'une transmission à variation continue

(30) Priority: 30.01.2006 US 763295 P
(43) Date of publication of application: 29.10.2008
(73) Proprietor: Fallbrook Technologies Inc., San Diego, CA 92121 (US)
(72) Inventor: ARMSTRONG, Oronde, Austin, TX 78753 (US); BARROW, Chris, Queens Village, NY 11428 (US); ELHARDT, Paul, Charlotte, NC 28273 (US); MACK, Henry, Phillipsburg, NJ 08865-9458 (US); MIGGELS, Stephen, Wyckoff, NJ 07481-2720 (US); TSORTSOROS, Stephen, Hawthorne, NJ 07506 (US)
(74) Representative: Price, Paul Anthony King
(86) International application number: PCT/US2007/002597
(87) International publication number: WO 2007/089815

(56) References cited:
- EP-A1- 0 528 381
- WO-A1-01/73319
- WO-A1-03/086849
- US-A- 4 735 430
- US-A- 6 101 895
- US-A1- 2002 189 524
- US-B2- 7 104 154

## Description

### Cross-Reference to Related Applications

This application claims the benefit of and priority to U.S. Provisional Patent Application No. 60/763,295 filed January 30, 2006 .

### Technical Field of the Invention

The present invention relates to a continuously variable transmission and specifically to a means for shifting that transmission through a range of input/output ratios.

### Background of the Invention

A transmission is any mechanical linkage that converts an input torque to an output torque. It usually involves a series of gears that have differing diameters, allowing a first gear at a first rotation rate to link to a second gear rotating at a second rate. The most common application for transmissions is in a vehicle. For example, a car may have an automatic transmission or a manual transmission. A bicycle has a simple transmission that links the pedals to the hub of the rear wheel.

Transmissions allow an input force to be converted into a more useful and appropriate output. However, by using gears and linkages, a typical transmission may only have four or five ratios available. For example, a four speed automatic transmission in a car has only four sets of output gears to couple to the engine's input. A ten speed bike has only ten ratios of input to output. A need exists for a transmission that is not limited by the number of gears. Yet, to place a larger number of gears into a transmission increases its costs and weight and space requirements.

A Continuously Variable Transmission (CVT) is a transmission that eliminates the need for a specified number of gears. Instead it allows an almost limitless number of input-to-output ratios. This allows an output (i.e. the speed of a vehicle) to be achieved at an optimal input (i.e. the rpm of the engine). For example, an engine might be most efficient at 1800 rpm. The peak torque output for the engine might be achieved at this engine rpm, or perhaps the highest fuel economy. Yet, in third gear, the car might be going faster at 1800 rpm than the driver desires. A continuously variable transmission would allow an intermediate ratio to be achieved that allowed the optimal input to achieve the desired output.

There are several examples of CVTs. U.S. Patent Number 6,419,608 entitled "Continuously Variable Transmission" is owned by Fallbrook Technologies of Fallbrook, California. It discloses a CVT that uses a series of rolling spheres, also called power adjusters, to couple the input and output

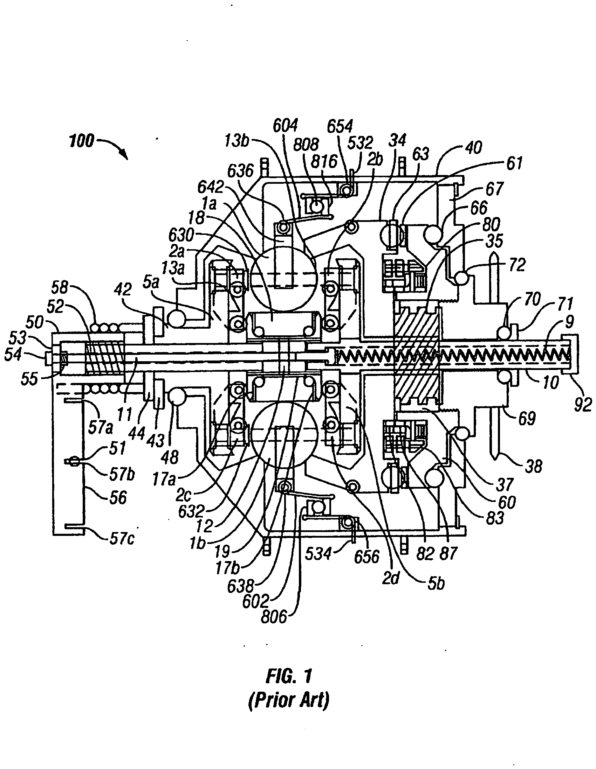

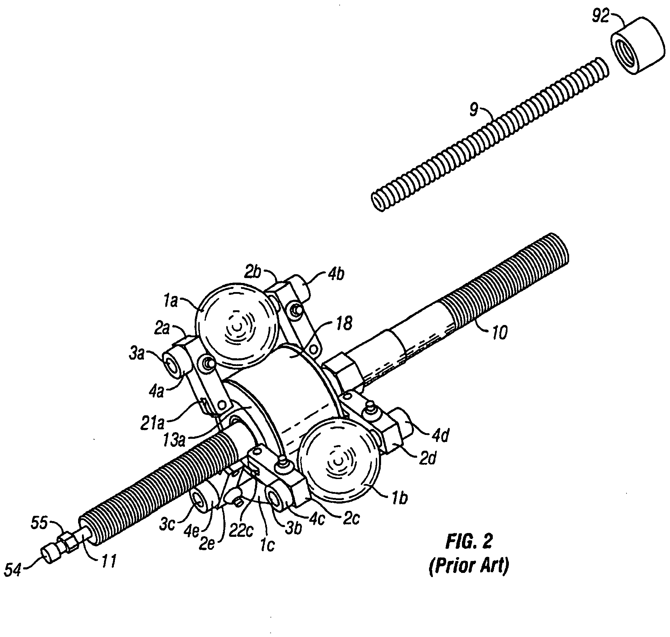

Referring to **Figures 1** and **2**, a prior art continuously variable transmission **100** is disclosed such as the one in the Fallbrook Technologies '608 patent. The transmission **100** is shrouded in a hub shell **40** covered by a hub cap 67. At the heart of the transmission **100** are three or more power adjusters **1a, 1b, 1c** which are spherical in shape and are circumferentially spaced equally around the centerline or axis of rotation of the transmission **100.**

As seen more clearly in **Figure. 2****,** spindles **3a, 3b, 3c** are inserted through the center of the power adjusters **1a, 1b, 1c** to define an axis of rotation for the power adjusters **1a, 1b, 1c.** In **Figure 1****,** the power adjuster's axis of rotation is shown in the horizontal direction. Spindle supports **2a-2f** are attached perpendicular to and at the exposed ends of the spindles **3a, 3b, 3c.** In one embodiment, each of the spindles supports has a bore to receive one end of one of the spindles **3a, 3b, 3c.** The spindles **3a, 3b, 3c** also have spindle rollers **4a-4f** coaxially and slidingly positioned over the exposed ends of the spindles **3a, 3b, 3c** outside of the spindle supports **2a-2f.**

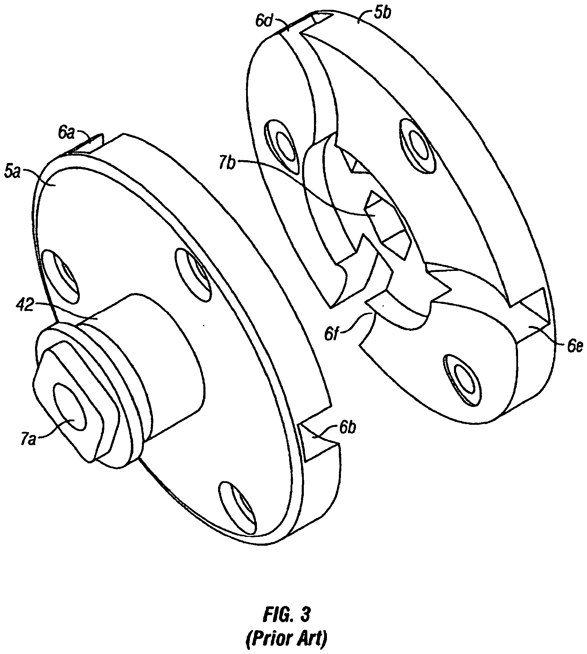

As the rotational axis of the power adjusters **1a, 1b, 1c** is changed by tilting the spindles **3a, 3b, 3c,** each spindle roller **4a-4f** follows in a groove **6a-6f** (see **Figure 3**) cut into a stationary support **5a, 5b.**

Referring to **Figures 1** and **3****,** the stationary supports **5a, 5b** are generally in the form of parallel disks with an axis of rotation along the centerline of the transmission **100**. The grooves **6a-6f** extend from the outer circumference of the stationary supports **5a, 5b** towards the centerline of the transmission **100**. While the sides of the grooves **6a-6f** are substantially parallel, the bottom surface of the grooves **6a-6f** forms a decreasing radius as it runs towards the centerline of the transmission **100**. As the transmission **100** is shifted to a lower or higher gear by changing the rotational axes of the power adjusters **1a, 1b, 1c,** each pair of spindle rollers **4a-4f** moves in opposite directions along their respective grooves **6a-6f.**

A centerline hole **7a, 7b** in the stationary supports **5a, 5b** allows the insertion of a hollow shaft **10** through both stationary supports **5a, 5b.**

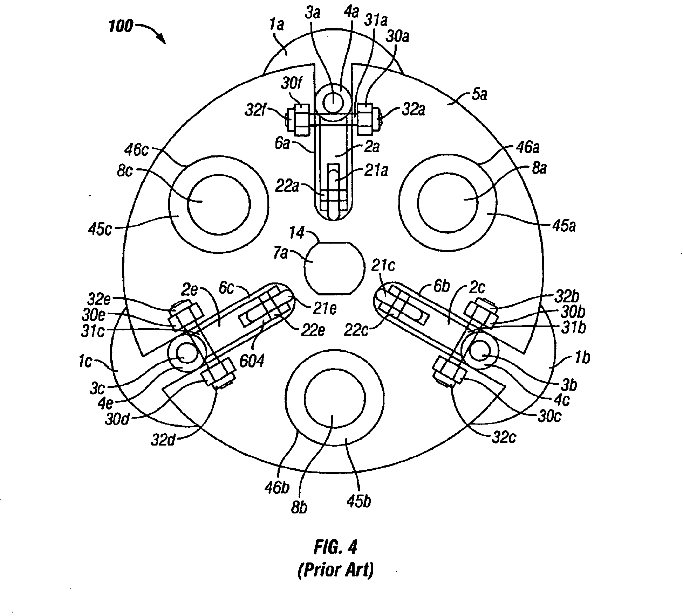

**Figure 4** is a plan view of a stationary support in accordance with the prior art. One or more of the stationary support holes **7a, 7b** may have a non-cylindrical shape **14,** which fits over a corresponding non-cylindrical shape **15** along the hollow shaft **10** to prevent any relative rotation between the stationary supports **5a, 5b** and the hollow shaft **10**. If the rigidity of the stationary supports **5a, 5b** is insufficient, additional structure may be used to minimize any relative rotational movement or flexing of the stationary supports **5a, 5b.** This type of movement by the stationary supports **5a, 5b** may cause binding of the spindle rollers **4a-4f** as they move along the grooves **6a-6f**.

Referring back to **Figures 1** and **3**, the stationary support **5a** is fixedly attached to a stationary support sleeve **42**, which coaxially encloses the hollow shaft **10** and extends through the wall of the hub shell **40**. The end of the stationary support sleeve **42** that extends through the hub shell **40** attaches to the frame support and preferentially has a non- cylindrical shape to enhance subsequent attachment of a torque lever **43**. The torque lever **43** is placed over the non-cylindrical shaped end of the stationary support sleeve **42**, and is held in place by a torque nut **44**. The torque lever **43** at its other end is rigidly attached to a strong, non-moving part, such as a frame (not shown). A stationary support bearing **48** supports the hub shell **40** and permits the hub shell **40** to rotate relative to the stationary support sleeve **42**.

Referring back to **Figures 1** and **2**, shifting is manually activated by axially sliding a rod **11** positioned in the hollow shaft **10**. One or more pins **12** are inserted through one or more transverse holes in the rod **11** and further extend through one or more longitudinal slots **16** (not shown) in the hollow shaft **10**. The slots **16** in the hollow shaft **10** allow for axial movement of the pin **12** and rod **11** assembly in the hollow shaft **10**. As the rod **11** slides axially in the hollow shaft **10**, the ends of the transverse pins **12** extend into and couple with a coaxial sleeve **19**. The sleeve **19** is fixedly attached at each end to a substantially planar platform **13a, 13b** forming a trough around the circumference of the sleeve **19.**

As seen more clearly in **Figure 4****,** the planar platforms **13a, 13b** each contact and push multiple wheels **21a-21f.** The wheels **21a-21f** fit into slots in the spindle supports **2a-2f** and are held in place by wheel axles **22a-22f.** The wheel axles **22a-22f** are supported at their ends by the spindle supports **2a-2f** and allow rotational movement of the wheels **21a-21f.**

Referring back to **Figures 1** and **2****,** the substantially planar platforms **13a, 13b** transition into a convex surface at their outer perimeter (farthest from the hollow shaft **10**). This region allows slack to be taken up when the spindle supports **2a-2f** and power adjusters **1a, 1b, 1c** are tilted as the transmission **100** is shifted. A cylindrical support member **18** is located in the trough formed between the planar platforms **13a, 13b** and sleeve **19** and thus moves in concert with the planar platforms **13a, 13b** and sleeve **19**. The support member **18** rides on contact bearings **17a,17b** located at the intersection of the planar platforms **13a, 13b** and sleeve **19** to allow the support member **18** to freely rotate about the axis of the transmission **100**. Thus, the bearings **17a, 17b,** support member **18,** and sleeve **19** all slide axially with the planar platforms **13a, 13b** when the transmission **100**is shifted.

Referring to **Figures 3** and **4**, stationary support rollers **30a-30*l*** are attached in pairs to each spindle leg **2a-2f** through a roller pin **31a-31f** and held in place by roller clips **32a-32*l*.** The roller pins **31a-31f** allow the stationary support rollers **30a-30*l*** to rotate freely about the roller pins **31a-31f**. The stationary support rollers **30a-30*l*** roll on a concave radius in the stationary support **5a**, **5b** along a substantially parallel path with the grooves **6a-f.** As the spindle rollers **4a-4f** move back and forth inside the grooves **6a-6f,** the stationary support rollers **30a-30*l*** do not allow the ends of the spindles **3a, 3 b, 3c** nor the spindle rollers **4a-4f** to contact the bottom surface of the grooves **6a-6f,** to maintain the position of the spindles **3a, 3b, 3c**, and to minimize any frictional losses.

While a continuously variable transmission is artful on paper, the realities of making one work smoothly requires significant know how. For example, a need exists for a method to axially shift the rod **11**. Such a shifter would be useful in any environment that the CVT is used.

US-4-735,430-A discloses a shifter having the features of the pre-characterizing portion of claim 1.

### Summary of the Invention

According to the present invention, there is provided a shifter for use with a CVT, the shifter comprising:
a grip portion; and
a hub portion coupled to the grip portion by a cable, wherein the grip portion can be rotated to adjust a pulley located in the hub portion;
characterized in that the grip portion has a display, wherein the display has a filament that is moveable from a first position to a second position, the filament being configured to change shape from a flat line to a curved line.

Specifically, the shifter is designed for use on a bicycle, but could also be used with any light vehicle.

The grip portion may be characterized by a rotatable adjuster that is coupled to the cable. As the adjuster is rotated, the cable is pulled, in turn rotating a pulley assembly in the hub portion. As the pulley assembly is rotated, it advances a rod within a continuously variable transmission. The rod adjusts the power adjusters as described above.

The grip portion is also unique in its display of information to the rider. A CVT does not have a "gear". Yet the average rider is conditioned to think in terms of riding in a particular gear, for example, fourth gear. Instead, with a CVT it is important for the user to think instead of the ratio between the input (the pedal rotation) and the output (the rear wheel rpm). So, the grip portion includes a display showing the ratio. The filament curves as the ratio is adjusted. A high ratio renders the filament flat, and indeed this ratio is appropriate for riding on a relatively flat surface. The filament takes on a steep curve as the ratio is adjusted to make riding up hills easier.

### Brief Description of the Drawings

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** is a cross section view of a continuously variable transmission in accordance with the prior art;
**Figure 2** is an exploded view showing the transmission "power adjusters" of the prior art;
**Figures 3** is an exploded view of stationary supports in a continuously variable transmission in accordance with the prior art;
**Figure 4** is a plan view of a stationary support in accordance with the prior art;
**Figure 5** shows a handle grip portion of a shifter in accordance with the present invention;
**Figure 6a** illustrates the hub portion of a shifter in accordance with the present invention;
**Figure 6b** is a cross section view of the housing and pulley assembly of the present invention;
**Figure 6c** provides an illustration of a typical bicycle that includes the shifter of the present invention;
**Figure 7** is a cutaway side plan view showing the pulley system in the housing;
**Figure 8a** is a perspective view of the pulley system in accordance with the present invention;
**Figure 8b** is an exploded view of the pulley system;
**Figure 8c** is a reverse angle exploded view of the pulley system;
**Figure 9a** is a perspective view of the hub housing mounted onto a wheel axle;
**Figure 9b** is a side plan view of the hub housing mounted onto a wheel axle;
**Figure 10a** is a side top view of the pulley system interacting with the cables;
**Figure 10b** is a side bottom view of the pulley system interacting with the cables;
**Figure 11a** is an exploded view of the pulley system in relation to a bike wheel axle;
**Figure 11b** is a reverse angle exploded view of the pulley system in relation to a bike wheel axle;
**Figure 12a** is a side view of the pulley system mounted onto a bike wheel axle in accordance with the present invention;
**Figure 12b** is a side plan view of the inner pulley mounted onto the wheel axle;
**Figure 12c** is a side plan view of the outer pulley mounted onto the bike wheel axle;
**Figure 13** is a plan view of the inside surface of the outer pulley;
**Figure 14a** is a perspective sectional view of the pulley system; and
**Figure 14b** is a side cross section view of the pulley system.

### Detailed Description of the Drawings

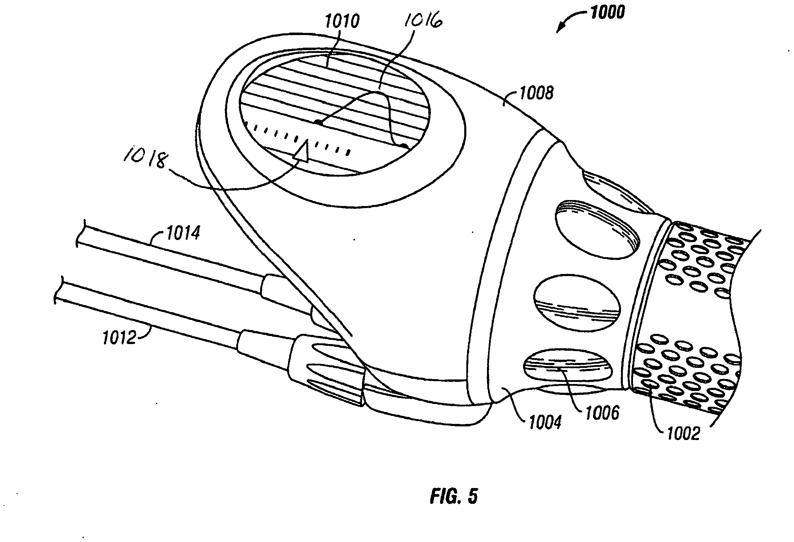

**Figure 5** shows a bicycle handle grip portion of a shifter in accordance with the preferred embodiment of the present invention. The shifter has two portions, a rotatable hand grip **1000** located on the handle bars of the bicycle as pictured and a hub **1100** located near the axle of the rear wheel. The grip **1000** is also known as the ratio controller.

While riding the bicycle, the rider will grip cover portion **1002**. As the rider encounters, for example, steeper terrain, he will want to alter the transmission ratio so that more rotations of the pedals (the input) produce fewer rotations of the rear wheel (the output). To alter this transmission ratio, the user rotates the adjuster **1004**, which in turn manipulates cable **1012, 1014.** The adjuster **1004** can include several indents to assist the rider.

A unique element of the shifter is a visual display **1010** of the input/output ratio. This is located on a housing **1008.** A filament **1016** is attached to the display **1010.** As the indicator **1018** moves from left to right, the filament **1016** changes shape from a flat line when all the way left to a curved line when all the way to the right. This visually represents the transmission ratio in relation to the terrain.

If the rider is on flat roads the indicator **1018** is all the way left (flat line), which sets the transmission to the highest ratio. When the rider is climbing a hill the indicator **1018** is all the way right, representing a hill (curved line) which sets the transmission to the lowest ratio. The indicator **1018** translates back and forth across the face and is controlled by a lead screw driven by the adjuster **1004.** The scale is from 0 to 100%. Because this is a Constant Variable Transmission (CVT), there is not a specific "gear," (e.g., fourth gear).

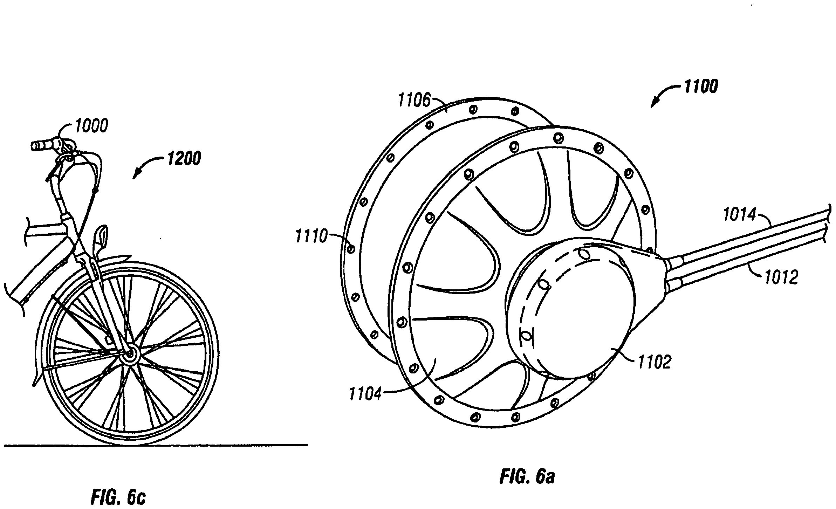

**Figure 6a** illustrates the hub portion of a shifter in accordance with the present invention. The rear hub **1100** includes a pulley housing **1102** that encloses and protects a pulley system coupled to cables **1012** and **1014.** The hub **1100** is also coupled to a CVT within hub body **1104.** The CVT can be a type similar to the Fallbrook Technologies CVT described above, or could be any suitable design that allows for the adjustment of the power adjusters. The hub body **1104** should be relatively compact to fit concentrically with the axle of the rear wheel. Various mounting holes **1110** can be provided on the housing to facilitate mounting of spokes.

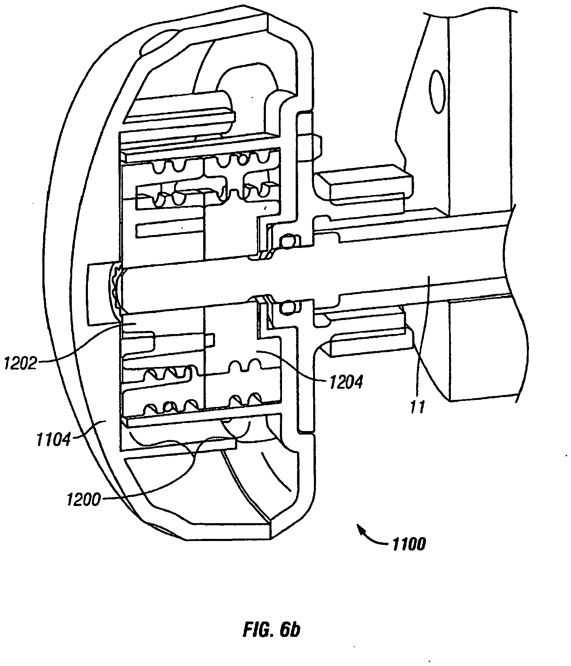

**Figure 6b** is a cross section view of the housing and the pulley assembly in accordance with the present invention. The pulley system **1200** includes a pair of pulleys **1202** and **1204.** First cable **1012** is attached to the first pulley **1202** so that a tension on the cable **1012** causes the pulley to rotate. Upon rotation, a rod **11** located axially with the pulleys translates in the axial direction. Similarly, second cable **1014** is attached to the second pulley **1204** so that a tension on the cable **1014** causes the pulley to rotate in the opposite direction than that of pulley **1202,** thereby causing the rod to translate in the opposite axial direction.

**Figure 6c** provides an illustration of a typical bicycle that includes the present shifter. The grip portion **1000** can be located on the handle bars. However the shifter could be also be located on around any tubular structure on the bicycle.

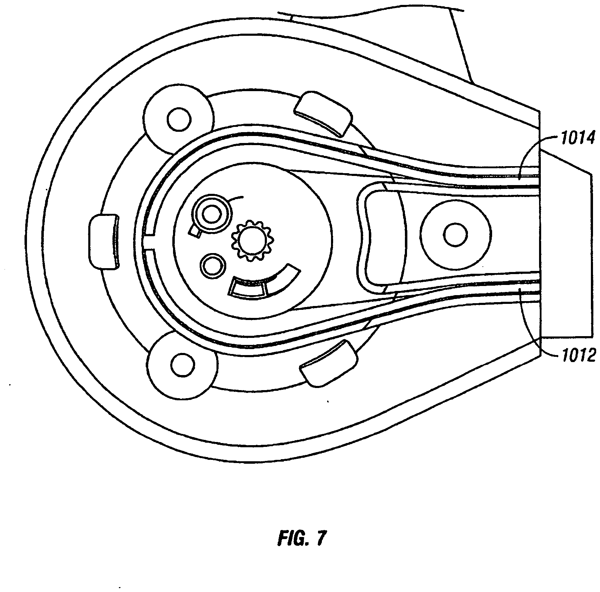

**Figure 7** is a cutaway side plan view showing the pulley system in the housing. This view shows the housing **1102** with the outside cover removed and illustrates the interaction between the cables **1012** and **1014** and the pulleys. Each cable is terminated into either pulley **1202** or **1204.** As the adjuster **1004** on the handle is turned clockwise or counterclockwise, one cable is tensioned and rotated. Rotation of the pulleys produces a translation in rod **11** thereby shifting the CVT.

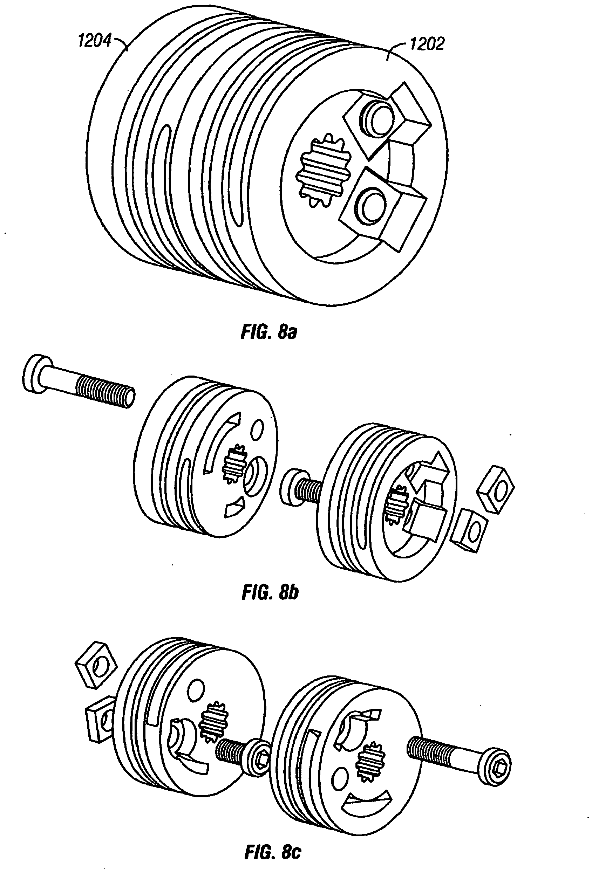

**Figure 8a** is a perspective view of the pulley system in accordance with the present invention. This view shows the two pulleys **1202, 1204** mounted together. **Figure 8b** is an exploded view of the pulley system. **Figure 8c** is a reverse angle exploded view of the pulley system.

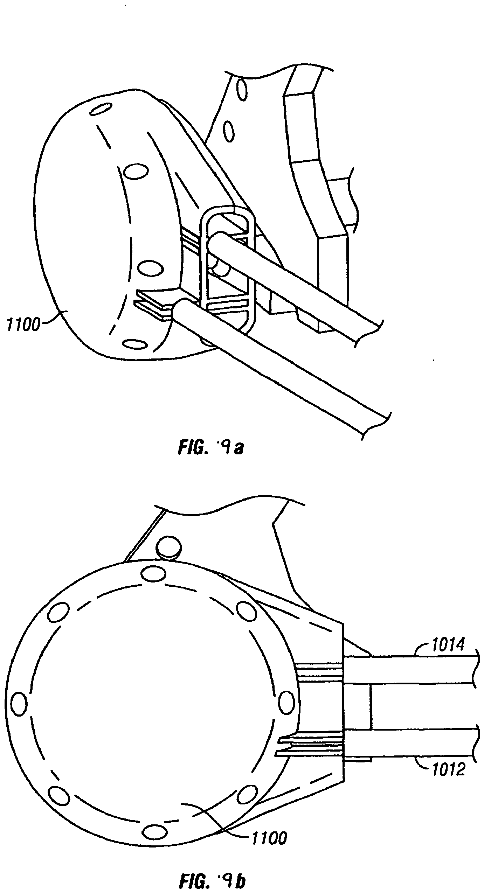

**Figure 9a** is a perspective view of the hub housing mounted onto a wheel axle. **Figure 9b** is a side plan view of the hub housing mounted onto the wheel axle. In the preferred embodiment, the front edge of the housing is trimmed to stay inside the chain guard of the bike.

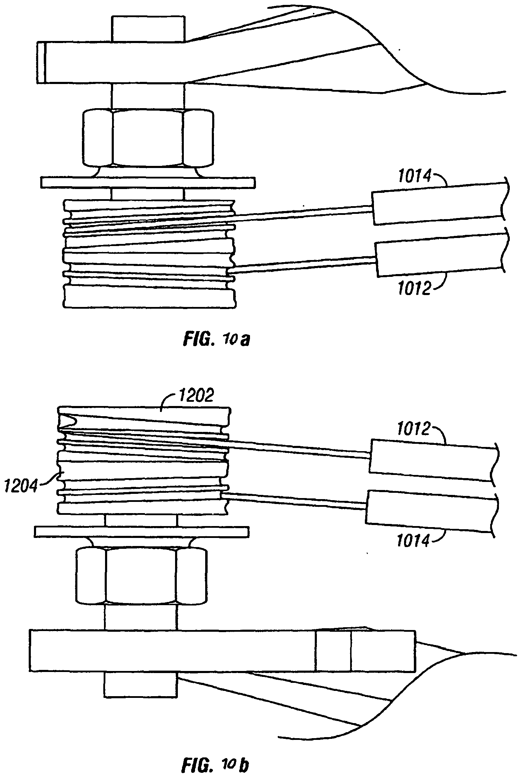

**Figure 10a** is a side top view of the pulley system interacting with the cables. **Figure 10b** is a side bottom view of the pulley system. These views more clearly illustrates how cable **1012** attaches to pulley **1202** and cable **1014** attaches to pulley **1204.** In the preferred embodiment, the cables **1012, 1014** are angled at four degrees. For the cable grooves in the pulleys **1202, 1204** opposing helixes were used to keep the cables **1012, 1014** in line.

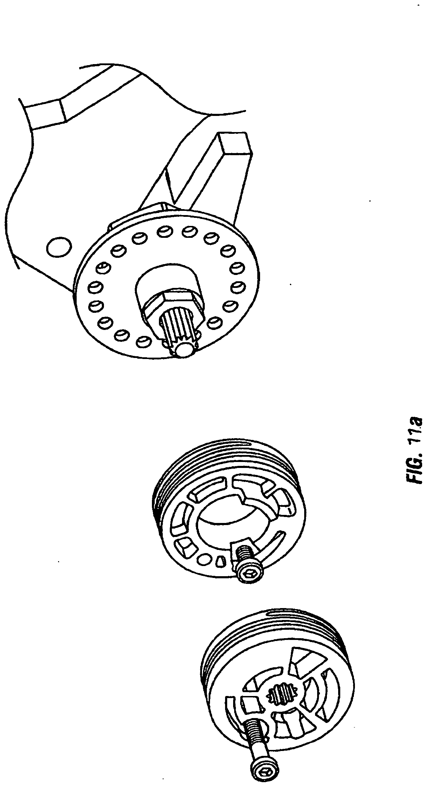

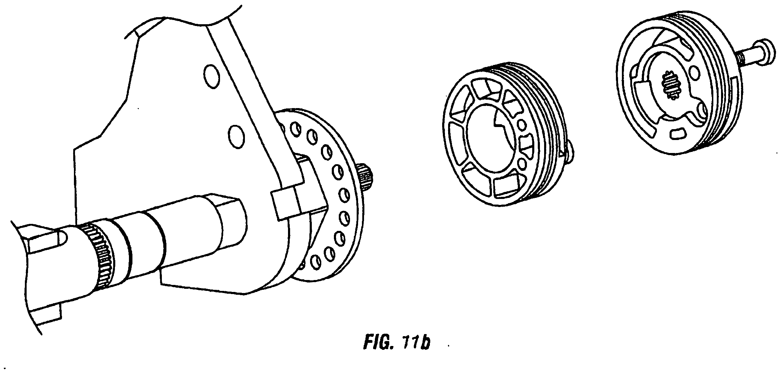

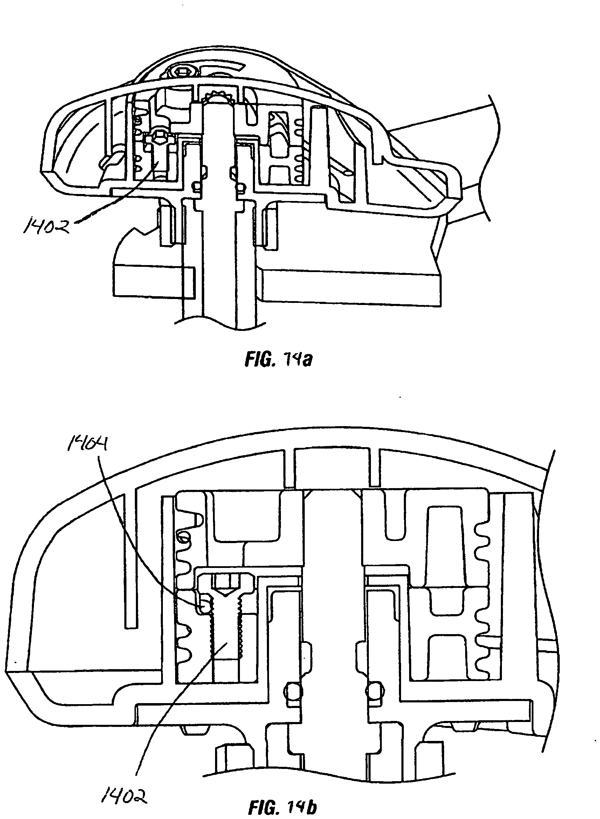

**Figure 11a** is an exploded view of the pulley system in relation to a bike wheel axle. **Figure 11b** is a reverse angle exploded view of the pulley system. In the pre assembly state, the screws are left loose to fit the cables under the head of the M3 screws (shown in **Figure 14a****-b).** The holes in the wheel base are spaced at 20 degrees to allow for adjustable alignment to bicycle frame.

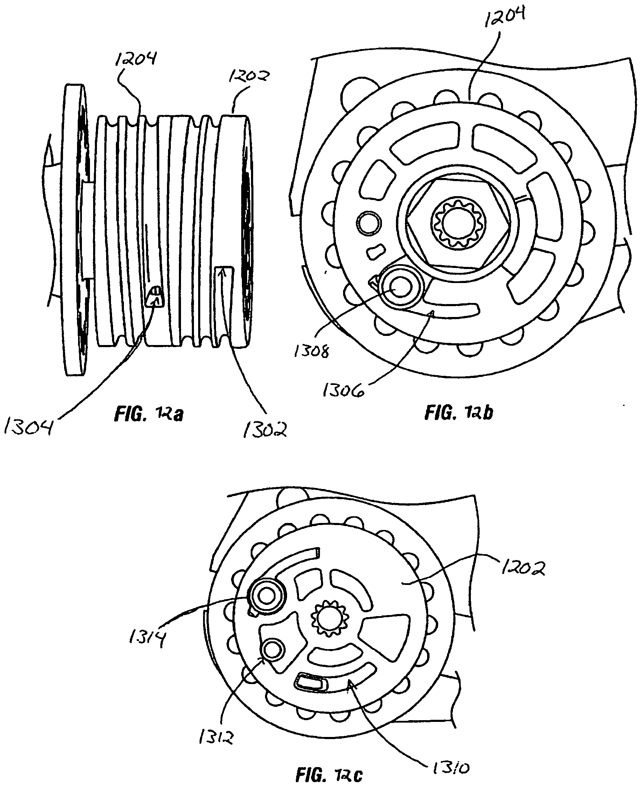

**Figure 12a** is a side view of the pulley system mounted onto the bike wheel axle in accordance with the present invention. This view shows the two holes **1302,1304** through which the cables **1012, 1014,** respectively, are secured to the pulleys.

**Figure 12b** is a side plan view of the inner pulley mounted onto the wheel axle.
In this view, the outer pulley **1202** has been removed to provide a clearer view of pulley **1204.** After the second cable **1014** is inserted through the hole **1304,** it slide under the head of the fastener **1308** and up the ramp **1306.**

**Figure 12c** is a side plan view of the outer pulley mounted onto the bike wheel axle. The second cable **1014** continues from the ramp **1306** in the inner pulley **1204** through ramp **1310** in the outer pulley **1202** where it can be tensioned by hand by tightening screw **1312,** cut, and put back into the ramp pocket

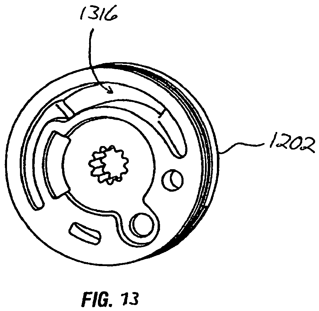

Similarly, the first cable **1012** is inserted through hole **1302** in the outer pulley and slides under the fastener **1314,** which is screwed down by hand. The cable is trimmed and place into the ramp pocket **1316** shown in the reverse plan view of the outer pulley in **Figure 13****.**

**Figure 14a** is a perspective sectional view of the pulley system, and **Figure 14b** is a side cross section view of the pulley system. The view in Figure **14a** shows the pulley system with the outer housing cover removed. Both of these views show a M3 screw **1402** which is used to secure the second cable **1014** in the inner pulley and the space **1404** through which the cable is threaded.

The description of the present invention has been presented for purposes of illustration and description, and is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated.

## Claims

1. A shifter for use with a CVT having an input/output ratio the shifter comprising:
a grip portion (1000); and
a hub portion (1100) coupled to the grip portion (1000) by a cable (1012, 1014), wherein the grip portion (1000) can be rotated to adjust a pulley (1202, 1204) located in the hub portion (1100);
**characterized in that** the grip portion (1000) has a display (1010), wherein the display (1010) has a filament (1016) that is moveable from a first position to a second position, the filament (1016) being configured to change shape from a flat line to a curved line, wherein the flat line corresponds to a high ratio appropriate for riding on a relatively flat surface and the curved line corresponds to a low ratio which makes riding up hill easier.

2. The shifter of claim 1 wherein the grip portion (1000) comprises an adjuster (1004) coupled to the cable (1012, 1014), wherein the adjuster (1004) can be rotated to adjust the tension on the cable (1012, 1014).

3. The shifter of claim 1 wherein the hub portion (1100) comprises a case and a pulley assembly (1200) within the case.

4. The shifter of claim 3 wherein an adjustment in a tension on the cable (1012, 1014) rotates the pulley assembly (1200) in the hub portion (1100).

5. The shifter of claim 4 wherein the pulley assembly (1200) is operatively coupled to a continuously variable transmission so than an adjustment to the pulley assembly (1200) alters a power adjuster in the transmission.

6. The shifter of claim 1 wherein an adjustment of the shifter further adjusts a ratio between an input force and an output force.

## Patentansprüche

1. Schieber für die Verwendung mit einem CVT (continuously variable Transmission - stufenloses Getriebe), welches ein Eingangs-/Ausgangsverhältnis hat, wobei der Schieber aufweist:
einen Greifabschnitt (1000), und
einen Nabenabschnitt (1100), der mit dem Greifabschnitt (1000) über ein Kabel (1012, 1014) verbunden ist, wobei der Greifabschnitt (1000) so gedreht werden kann, dass er eine Antriebsscheibe (1202, 1204) einstellt, die in dem Nabenabschnitt (1100) liegt,
**dadurch gekennzeichnet, dass** der Greifabschnitt (1000) eine Anzeige (1010) hat, wobei die Anzeige (1010) ein Filament (1016) hat, welches aus einer ersten Position in eine zweite Position bewegbar ist, wobei das Filament (1016) so ausgestaltet ist, dass es seine Form von einer flachen Linie in eine gekrümmte Linie verändert, wobei die flache Linie einem hohen Verhältnis entspricht, das geeignet ist für das Fahren auf einer relativ flachen Strecke und die gekrümmte Linie einem niedrigen Verhältnis entspricht, welches das Bergauffahren leichter macht.

2. Schieber nach Anspruch 1, wobei der Greifabschnitt (1000) ein Einstellelement (1004) aufweist, welches mit dem Kabel (1012, 1014) verbunden ist, wobei das Einstellelement (1004) so gedreht werden kann, dass die Zugspannung auf das Kabel (1012, 1014) eingestellt wird.

3. Schieber nach Anspruch 1, wobei der Nabenabschnitt (1100) ein Gehäuse und einen Riemenaufbau (1200) innerhalb des Gehäuses aufweist.

4. Schieber nach Anspruch 3, wobei eine Einstellung der Zugspannung auf das Kabel (1012, 1014) zu einer Drehung des Antriebsscheibenaufbaus (1200) in dem Nabenabschnitt (1100) führt.

5. Schieber nach Anspruch 4, wobei der Antriebsscheibenaufbau (1200) mit einem stufenlosen Getriebe wirksam so verbunden ist, dass eine Einstellung des Antriebsscheibenaufbaus (1200) einen Krafteinsteller in dem Getriebe verändert.

6. Schieber nach Anspruch 1, wobei eine Einstellung des Schiebers weiterhin ein Verhältnis zwischen einer Eingangskraft und einer Ausgangskraft einstellt.

## Revendications

1. Sélecteur destiné à être utilisé avec une CVT (transmission à variation continue), ayant un rapport d'entrée/sortie, le sélecteur comprenant :
une partie de poignée (1000) ; et
une partie de moyeu (1100) couplée à la partie de poignée (1000) par un câble (1012, 1014), dans lequel la partie de poignée (1000) peut être entraînée en rotation pour ajuster une poulie (1202, 1204) positionnée dans la partie de moyeu (1100) ;
**caractérisé en ce que** la partie de poignée (1000) a un écran (1010), dans lequel l'écran (1010) a un filament (1016) qui est mobile d'une première position à une deuxième position, le filament (1016) étant configuré pour changer de forme en passant d'une ligne plate à une ligne incurvée, dans lequel la ligne plate correspond à un rapport élevé approprié pour se déplacer sur une surface relativement plate et la ligne incurvée correspond à un rapport bas qui facilite le déplacement en côte.

2. Sélecteur selon la revendication 1, dans lequel la partie de poignée (1000) comprend un dispositif de réglage (1004) couplé au câble (1012, 1014), dans lequel le dispositif de réglage (1004) peut être entraîné en rotation pour ajuster la tension sur le câble (1012, 1014).

3. Sélecteur selon la revendication 1, dans lequel la partie de moyeu (1100) comprend un carter et un ensemble de poulie (1200) à l'intérieur du carter.

4. Sélecteur selon la revendication 3, dans lequel un ajustement concernant une tension sur le câble (1012, 1014) fait tourner l'ensemble de poulie (1200) dans la partie de moyeu (1100).

5. Sélecteur selon la revendication 4, dans lequel l'ensemble de poulie (1200) est couplé de manière opérationnelle à une transmission à variation continue de sorte qu'un ajustement par rapport à l'ensemble de poulie (1200) modifie un dispositif de réglage de puissance dans la transmission.

6. Sélecteur selon la revendication 1, dans lequel un ajustement du sélecteur ajuste en outre un rapport entre une force d'entrée et une force de sortie.
